(19)

Europäisches
Patentamt
European
Patent Office
Office européen
des brevets

(11) **EP 3 845 815 B1**

(12) **EUROPEAN PATENT SPECIFICATION**

(45) Date of publication and mention
of the grant of the patent:
**22.03.2023  Bulletin 2023/12**

(21) Application number: **19220209.1**

(22) Date of filing: **31.12.2019**

(51) International Patent Classification (IPC):
**F23R 3/44** *(2006.01)*      **F02C 9/50** *(2006.01)*
**F23N 5/24** *(2006.01)*

(52) Cooperative Patent Classification (CPC):
**F23R 3/44; F02C 9/50; F23N 1/002; F23N 3/002;
F23N 5/242;** F05D 2260/964; F05D 2270/14;
F05D 2270/334; F23N 2223/06; F23N 2223/10;
F23N 2225/04; F23R 2900/00013

(54) **GAS TURBINE ENGINE WITH ACTIVE PROTECTION FROM PULSATIONS AND A METHOD OF OPERATING A GAS TURBINE ENGINE**

GASTURBINENMOTOR MIT AKTIVEM SCHUTZ VOR PULSATIONEN UND VERFAHREN ZUM BETREIBEN EINES GASTURBINENMOTORS

MOTEUR À TURBINE À GAZ DOTÉ D'UNE PROTECTION ACTIVE CONTRE LES PULSATIONS ET PROCÉDÉ DE FONCTIONNEMENT D'UN MOTEUR DE TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.07.2021  Bulletin 2021/27**

(73) Proprietor: **Ansaldo Energia Switzerland AG
5400 Baden (CH)**

(72) Inventors:
• **CUQUEL, Alexis
  5400 BADEN (CH)**
• **GHIRARDO, Giulio
  5400 BADEN (CH)**

• **BOTHIEN, Mirko Ruben
  8037 ZURICH (CH)**

(74) Representative: **Bernotti, Andrea et al
Studio Torta S.p.A.
Via Viotti, 9
10121 Torino (IT)**

(56) References cited:
WO-A1-2015/166396      US-A1- 2002 184 951
US-A1- 2005 056 024      US-A1- 2006 266 045
US-A1- 2007 062 196      US-A1- 2009 133 379
US-A1- 2012 275 899

## Description

TECHNICAL FIELD

The present invention relates to a gas turbine engine with active protection from pulsations and to a method of operating a gas turbine engine.

BACKGROUND

As known, flexible control of gas turbines in power plants has become an objective of primary importance over the last years. On the one hand, in fact, awareness of environmental risks drives towards regulations that set increasingly strict requirements. On the other hand, the organization of modern power market and the continuously variable demand do not allow to operate plants at constant load conditions. Instead, the need to meet demand fluctuations, including sudden rise or drop, and to contribute to control of grid frequency require flexible operation.

Such flexible operation, however, increases the risk that gas turbines undergo critical conditions, because a broad operation range is to be accounted for. Moreover, ageing of components may cause drift of critical conditions, so that dangerous states of vibration may arise during machine lifetime because of deviation from the design characteristics. Indeed, in the field of gas turbines, it is well known that mechanical and thermoacoustic vibrations may arise in different operating conditions. Such conditions depend on the response of the complex structure of the gas turbines and may widely vary according to the kind and the size of gas turbines and also change over time e.g. due to ageing of components. Operating conditions and frequencies at which oscillations occur may become apparent during the steps of design and test of gas turbines, thus making it possible to provide protective measures such as acoustic dampers. Such measures may become ineffective, however, when conditions change.

Thus, bad combustion conditions may cause serious damage to the machine structure, since some parts, such as thermoinsulating coatings, may easily suffer from vibrations and thermoacoustic pulsations, especially at certain frequencies. As a result, maintenance is required more frequently than it would be desirable. Moreover, despite a constant maintenance, turbine parts may lose effectiveness and no longer be able to adequately provide their function. In the case of thermoinsulating coatings, for example, the loss in effectiveness may lead to serious and even irreversible damage to metallic components that are no longer sufficiently protected.

Other critical events, such as excessive levels of polluting emissions, may not be dangerous for the machine in themselves, but they are anyway to be avoided both to comply with laws and regulations and because also the efficiency of the machine is significantly affected.

Therefore, there is a general interest in improving protection of gas turbines from critical operation conditions, in which dangerous vibrations and/or thermoacoustic pulsations may arise.

WO 2015/166396 A1 discloses a gas turbine engine comprising a combustor assembly, having a plurality of combustor units, and a control system, configured to control air supply and fuel supply to the combustor assembly. The control system comprises pulsation sensors coupled to respective combustor units and configured to provide pulsation signals) in response to pulsations at the respective combustor units; and a processing unit coupled to the pulsation sensors to receive the pulsation signals.

Other examples of known gas turbine engines are disclosed in US 2007/062196 A1, US 2012/275899 A1, US 2009/133379 A1 and US 2005/056024 A1.

SUMMARY OF THE INVENTION

It is thus an object of the present invention to provide a gas turbine engine and a method of operating a gas turbine that allow to overcome or at least attenuate the above described limitations.

According to the present invention, there is provided a gas turbine engine comprising:

> a combustor assembly, having a plurality of combustor units; and
> a control system, configured to control air supply and fuel supply to the combustor assembly;
> the control system comprising:

>> pulsation sensors coupled to respective combustor units and configured to provide pulsation signals from the respective combustor units; and
>> a processing unit coupled to the pulsation sensors to receive the pulsation signals;

> characterized in that the processing unit is configured to:

>> determine working time series of spectral parameters of at least one of the pulsation signals; and
>> to selectively activate protecting measures based on the working time series and activation criteria, wherein the activation criteria include value criteria, defined by inadmissible ranges of values of the spectral parameters, in combination with time criteria based on permanence of the spectral parameters in the inadmissible ranges of values.

The monitoring of spectral parameters of pulsation signals allows to identify adverse oscillating phenomena at very early stage and is not sensitive to ageing of components. More precisely, the monitoring carried out by the control system is effective in identifying early rise of adverse phenomena irrespective of whether such phenomena are associated with known critical conditions or are caused by unpredictable events such as ageing.

Protecting measures can change operating conditions of the gas turbine by modifying air and/or fuel supply so as to reduce impact of oscillating phenomena. In some cases, very small changes may be sufficient to bring the gas turbines in conditions of safe operation with low risk of dangerous oscillation. Moreover, protecting measures may be triggered when a clear trend is shown by time series, thus avoiding unnecessary intervention in response to fluctuations that do not actually reflect critical conditions (e.g. statistic errors). The control system may be configured to respond to activation of the protecting measures by directly modifying air supply and/or fuel supply to the combustor assembly or, otherwise, by sending alarm or warning messages that prompt operators to take actions, such as changing operating setpoints and, as a consequence, air supply and/or fuel supply.

The use of combined criteria helps reduce unnecessary activation of protecting measures.

According to an aspect of the invention, the spectral parameters comprise at least one peak amplitude in a respective programmed frequency range and the processing unit is further configured to compare the working time series of the peak amplitude with a respective individual amplitude threshold, the inadmissible ranges of values including peak amplitude values greater than the individual amplitude threshold.

In this manner, strongest oscillations can be easily identified and distinguished from background noise that is not an indicator of potentially dangerous conditions, thus allowing timely activation of the protecting measures as soon as critical oscillations rise at any one of the monitored combustor units.

According to an aspect of the invention, the spectral parameters comprise a plurality of peak amplitudes in respective programmed frequency bands for each of the at least one pulsation signal and the processing unit is further configured to compare a combination of the working time series of the peak amplitudes with a combination amplitude threshold, the inadmissible ranges of values including the values of the combination greater than the combination amplitude threshold.

Monitoring combinations of peak amplitudes in a plurality of frequency bands can reveal effects of non-linear coupling of acoustic modes, which may otherwise be missed. Protection is thus further improved.

According to an aspect of the invention, the spectral parameters comprise at least one peak frequency of a respective peak amplitude and the processing unit is further configured to compare the working time series of the peak frequency with a lower frequency threshold and an upper frequency threshold, the inadmissible ranges of values including a frequency band delimited by the lower frequency threshold and the upper frequency threshold.

The structure of the combustor assembly may show resonant behavior, sometimes even in very narrow bands, when oscillations approach eigenfrequencies of the structure. Hence, bad oscillations may be triggered even by relatively small amplitudes in critical bands, i.e. relatively small oscillations near eigenfrequencies may be amplified and cause resonance phenomena. Monitoring of oscillation peak frequencies allows to prevent the gas turbine from remaining in operating conditions that may trigger resonance. Small adjustment of air and/or fuel supply may in many cases change operating conditions enough to avoid resonant oscillations.

According to an aspect of the invention, the processing unit is configured to determine raw time series of the spectral parameters from the pulsation signals and to determine the working time series from respective raw time series by low-pass filtering.

False positives and short transient phenomena, which are not really significant, may be thus disregarded and unnecessary activation of protection measures is avoided.

According to an aspect of the invention, the time criteria include at least one of:

the spectral parameters of the working time series continuously remaining in the inadmissible ranges of values for at least a first time interval;
the spectral parameters of the working time series continuously or discontinuously remaining in the inadmissible ranges of values for at least a cumulated second time interval within a check window;
a time counter reaching a count threshold, the counter being incremented by the processing unit when the spectral parameters of the working time series are inside the inadmissible ranges of values and remaining unchanged or being decremented by the processing unit when the spectral parameters of the working time series are outside the inadmissible ranges of values.

Appropriate time criteria are thus made available and may be used in accordance to the design preferences, in order to balance timely activation of protection measures and effective rejection of false positives.

According to an aspect of the invention, there is also provided a method of operating a gas turbine comprising a combustor assembly, having a plurality of combustor units, and a control system, configured to control air supply and fuel supply to the combustor assembly;

the method comprising:
providing pulsation signals in response to pulsations at respective combustor units;
characterized by:

determining working time series of spectral parameters of at least one of the pulsation signals; and
selectively activating protecting measures based on the working time series and activation criteria;

wherein activating protecting measures comprises modifying air supply and/or fuel supply to the combustor assembly and wherein the activation criteria include value criteria, defined by inadmissible ranges of values of the spectral parameters, in combination with time criteria based on permanence of the spectral parameters in the inadmissible ranges of values.

BRIEF DESCRIPTION OF THE DRAWINGS

The present invention will now be described with reference to the accompanying drawings, which illustrate some non-limitative embodiments thereof, in which:

- figure 1 is a simplified block diagram of a gas turbine engine in accordance with and embodiment of the present invention;
- figure 2 is a schematic front view of a combustor assembly of the gas turbine engine of figure 1;
- figure 3 is a flow chart of a method carried out by a control system of the gas turbine of figure 1, in accordance with an embodiment of the present invention;
- figure 4 is a graph showing spectral quantities used in the method of figure 3;
- figures 5 and 6 are graphs showing time series used in the method of figure 3;
- figures 7-9 are graphs showing time series and alternative activation criteria usable in the method of figure 3;
- figure 10 is a graph showing time series used in a method carried out by a control system of the gas turbine of figure 1, in accordance with another embodiment of the present invention;
- figure 11 is a graphs showing activation criteria usable in the method of figure 10;
- figure 12 is a graph showing time series used in a method carried out by a control system of the gas turbine of figure 1, in accordance with another embodiment of the present invention.

DETAILED DESCRIPTION OF EXEMPLARY EMBODIMENTS

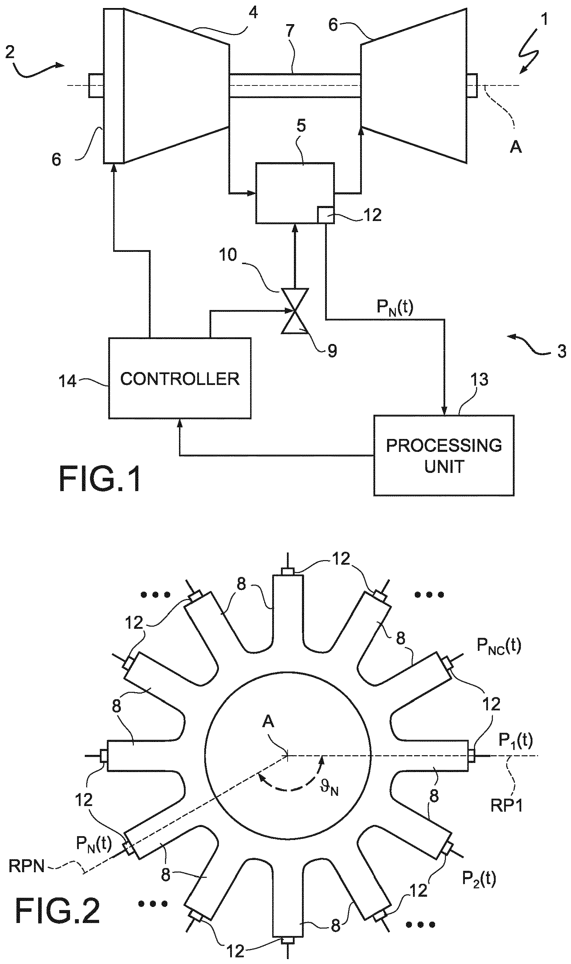

With reference to Figure 1, number 1 defines a gas turbine plant as a whole comprising a gas turbine engine 2 and a control system 3. The gas turbine engine 2, in turn, comprises a compressor 4, a combustor assembly 5 and an expansion section or turbine 6, all extending about an axis A. The compressor 4 and the turbine 6 share a common rotor 7.

The compressor 4 feeds the combustor assembly 5 with an airflow drawn from outside. Air supply to the compressor 4 is controllable by the control system 3 by adjusting orientation of inlet guide vanes 6 of the compressor 4.

The combustor assembly 5, for example a can or can-annular combustor, is provided with a plurality of combustor units 8, which are circumferentially distributed about the axis A, as schematically illustrated in figure 2. The combustor units 8 mix air from the compressor 4 and fuel from a fuel supply line 9 to form a mixture for combustion. The fuel may be gaseous, for example natural gas or syngas, or liquid, for example gasoil. The gas turbine engine 2 can be structured to use different types of fuel, both gaseous and liquid. Fuel supply is controllable by the control system 3 through a fuel valve system 10.

The turbine 6 receives and expands a flow of hot gas from the combustor assembly 5 to extract mechanical work, which is transferred to an external user, typically an electric generator, here not shown.

The control system 3 comprises pulsation sensors 12, a processing unit 13 and a controller 14. The pulsation sensors 12 may be e.g. pressure sensors or optical sensors.

The pulsation sensors 12 are coupled to respective combustor units 8 and configured to provide pulsation signals $P_N(t)$ in response to pulsations at the respective combustor units 8. In one embodiment, each combustor unit 8 is provided with a respective pulsation sensor 12, hence pulsation signals $P_1(t)$, $P_2(t)$, ..., $P_{NC}(t)$ are provided, NC being the number of combustor units 8 of the combustor assembly 5. Other configurations may be exploited, however, with pulsation sensors 12 associated only with selected combustor units 8, according to design preferences. Any kind of pulsation sensor capable of detecting pressure oscillations inside the combustor units 8 and/or mechanical vibrations of the structure of the combustor units 8 may serve the purpose. For example, piezoelectric pressure or vibration sensors or strain gauges may be used. Pulsation sensors 12 may be provided with detection electronics to supply the pulsation signals $P_N(t)$ in a form determined in accordance with design preferences, e.g. as voltage signals. For example, piezoelectric sensors typically provide charge signals as output. Thus, detection electronics may include charge amplifiers to convert the charge output of the piezoelectric sensors into a voltage output.

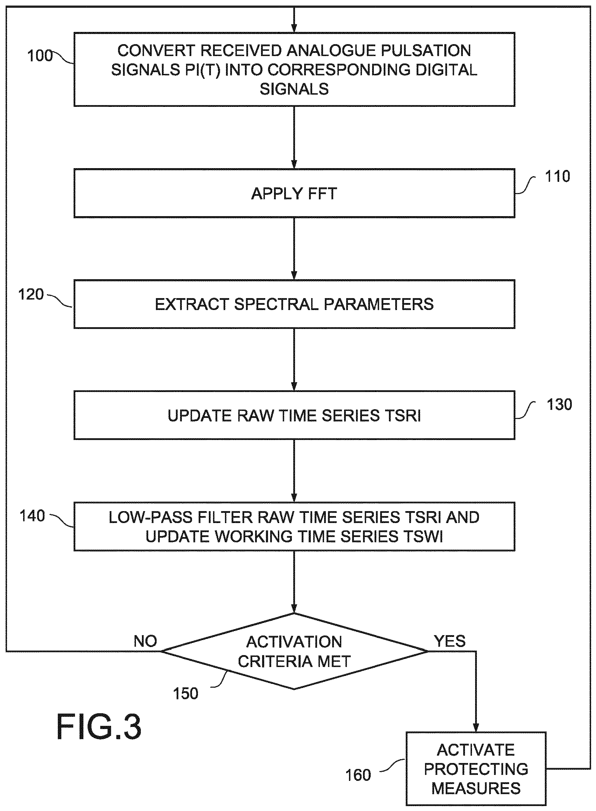

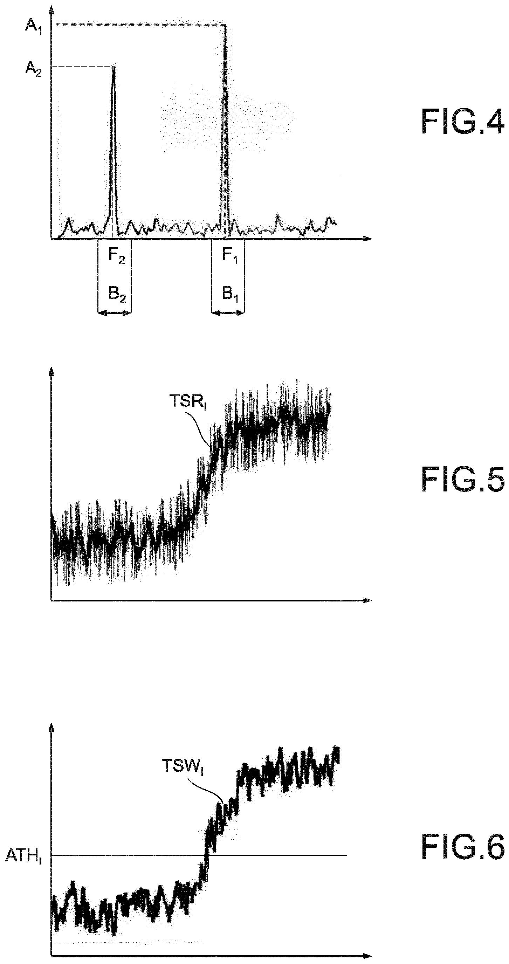

The processing unit 13 is coupled to the pulsation sensors to receive the pulsation signals $P_N(t)$. By the procedure illustrated in figure 3, the processing unit 13 is configured to determine working time series $TSW_N$ of spectral parameters of the pulsation signals $P_N(t)$ (see figures 4-6 and the relevant description as an example), and to selectively activate protecting measures based on the working time series $TSW_N$ and activation criteria. In one embodiment, the protecting measures may include automatic response of the control system 3. In this case, the control system is configured to modify air supply and/or fuel supply to the combustor assembly in response to activation of the protecting measures. The protecting measures may also include sending alarm or warning messages that prompt operators to take actions, such as changing operating setpoints and, as a consequence, air supply and/or fuel supply.

In general, time series are series of data points indexed in time order. Time series may be sequences of data equally spaced in time, hence sequences of discrete-time data. As understood herein, working time series are time series of spectral parameters used in the processing unit 13 for the purpose of implementing pulsation protection. As understood herein, raw time series are time series obtained directly as values of the spectral parameters calculated at successive points in time. In other words, spectra of pulsation signals $P_1(t)$, $P_2(t)$, ..., PNC(t) are determined at successive points in time and spectral parameters of interest are extracted. The succession of the values of the spectral parameters are extracted at each point in time defines the raw time series. The working time series may coincide with the raw time series or may be derived from the raw time series by processing. Processing may include e.g. filtering and is defined so that the resulting working time series are better suited to implementation of the pulsation protection.

Specifically, the processing unit 13 iteratively converts received analogue pulsation signals $P_N(t)$ into corresponding digital signals (figure 3, block 100) and applies Fast Fourier Transform (block 110) to determine series of frequency spectra for each of the pulsation signals $P_N(t)$. At every iteration, the processing unit 13 extracts selected spectral parameters of the frequency spectra (block 120; see also figure 4, wherein the extracted spectral parameters are peak amplitudes $A_1$, $A_2$) and updates the working time series $TSW_N$ based on extracted spectral parameters (blocks 130-140). In other words, each time series $TSW_N$ is based on the series of the values of a respective one of the spectral parameters as determined by the processing unit 13 in subsequent iterations. Values of the working time series $TSW_N$ need not be the exact values of the spectral parameters and processing may be added. In one embodiment, for example, the processing unit 13 updates (block 130) raw time series $TSR_N$ of the spectral parameters (i.e. series of the exact digital values of the spectral parameters, see figure 5 for peak amplitude $A_1$) of the pulsation signals $P_N(t)$ and determines the working time series $TSW_N$ from respective raw time series $TSR_N$ by low-pass filtering (block 140; see also figure 6 for filtered peak amplitude $A_1$). The working time series $TSW_N$ are thus smoothed to reduce false positives and avoid unnecessary activation of the protecting measures. However, in other embodiments, the raw time series of the spectral parameters may be directly used as the working time series $TSW_N$.

Moreover, at every iteration the processing unit 13 checks the updated time series $TSW_N$ on activation criteria (block 150) and activates protecting measures if the activation criteria are met (block 150, output YES; block 160). Then, a new iteration of the procedure is carried out by the processing unit 13 through steps of A/D conversion, FFT, spectral parameter extraction, update of the working time series $TSW_N$ and check of the activation criteria (blocks 100-150). If activation criteria are not met (block 150, output NO), the processing unit 13 directly starts a new iteration of the procedure.

Activation criteria include a combination of value criteria and time criteria. Value criteria are defined by inadmissible ranges of values of the spectral parameters, such as the time series being inside a forbidden region. Time criteria are based on permanence of the spectral parameters in the inadmissible ranges of values.

Time criteria may include one or more of the following conditions:

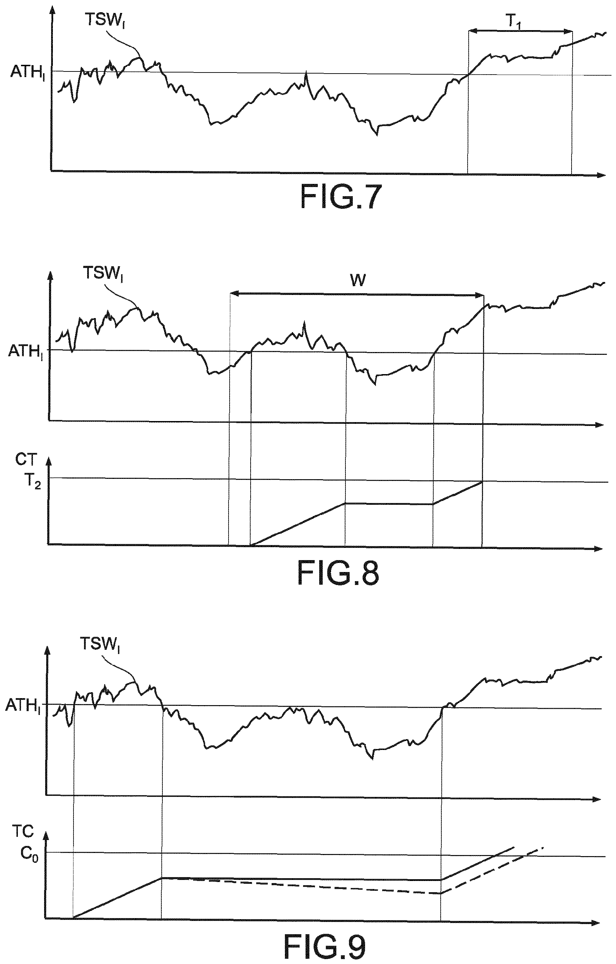

- the spectral parameters of the working time series $TSW_N$ continuously remain in the inadmissible ranges of values for at least a first time interval $T_1$ (in the example of figure 7, which refers to the working time series $TSW_N$ of peak amplitude $A_1$, the inadmissible range of values IRVI includes a region of peak amplitude values greater than an individual amplitude threshold $ATH_N$);
- the spectral parameters of the working time series $TSW_N$ continuously or discontinuously remain in the inadmissible ranges of values IRVI for at least a cumulated second time interval $T_2$ within a check window W (figure 8, where CT is the cumulated time in the forbidden region within the check window W); and
- a time counter TC, which is incremented by the processing unit 13 when the spectral parameters of the working time series $TSW_N$ are inside the inadmissible ranges of values IRVI and otherwise remain unchanged (figure 9, solid line) or is decremented (figure 5, dashed line), reaches a count threshold $C_0$.

Protecting measures may include changes in the operating conditions of the gas turbine engine 2. To this end, the processing unit 13 may adjust set-points for the controller 14, whereby the control system 3 modifies air supply and/or fuel supply to the combustor assembly 5 in response to activation of the protecting measures.

In one embodiment, the spectral parameters comprise at least one peak amplitude $A_1$ (figures 4-6). As understood herein, "peak amplitude" means the amplitude of spectrum peaks in one or more given monitored frequency bands in which dangerous pulsation may be expected. Spectrum peaks are normally much greater than the average spectrum amplitude and the amplitude of local peaks outside the monitored frequency bands. In the example of figure 4, a first peak amplitudes $A_1$ and a second peak amplitude $A_2$ are extracted in a first monitored band $B_1$ and in a second monitored band $B_2$, respectively. However, detection of peak amplitudes need not be confined to specific bands. For example, in one embodiment all peaks having amplitude exceeding a threshold may be detected. The threshold may be adaptively set e.g. as a function of the mean value and the standard deviation of the spectrum values. Each frequency corresponding to a respective peak and peak amplitude is defined as peak frequency of the respective peak. The processing unit 13 is further configured to compare the working time series $TSW_N$ of subsequent values if the peak amplitude $A_1$ with a respective individual amplitude threshold $ATH_N$. In this embodiment, the inadmissible ranges of values IRVI include peak amplitude values greater than the individual amplitude threshold $ATH_N$. The processing unit 13 may be configured to extract peak amplitudes from a plurality of programmed frequency bands. In one embodiment, each peak amplitude is individually monitored against activation criteria through a respective working time series $TSW_N$.

The monitoring may be extended to all the combustor units 8 or be limited to one or more of the combustor units 8, which for example may be known as more critical from design. The protecting measures may be activated e.g. when activation criteria are met for at least one of the combustor units 8, thus providing effective protection for each one of the combustor units 8.

In one embodiment, each combustor unit 8 is provided with a pulsation sensor 12 supplying a respective pulsation signal $P_N(t)$. The processing unit 13 is configured to determine also one or more azimuthal components $P^M(t)$ of order M from the pulsation signals $P_N(t)$ (up to NC, NC being a number of combustor units 8 in the combustor assembly 5) and to compare spectral parameters of the azimuthal components $P^M(t)$ (e.g. amplitude peaks and/or peak frequencies in given bands) with respective thresholds (amplitude thresholds and upper and lower frequency thresholds, respectively). The azimuthal components $P^M(t)$ of order M are defined as

$$P^M(t) = \frac{1}{NC} \sum_{N=1}^{NC} P_N(t) e^{iM\theta_N}$$

where NC is the number of combustor units 8 in the combustor assembly 5, $\theta_N = 2\pi \frac{N-1}{NC}$ is the azimuthal angle of the N-th combustor unit 8 of the NC combustor units 8, i is the imaginary unit, and azimuthal components have integer order M in the range [-ceil(NC/2) + 1; floor(NC/2)], wherein floor(NC/2) is the largest integer smaller than or equal to NC/2 and ceil(NC/2) is the smallest integer larger than or equal to NC/2. The azimuthal angle $\theta_N = 2\pi \frac{N-1}{NC}$ of the N-th combustor unit 8 (see figure 2) is defined as the angle between a reference plane $RP_1$, e.g. a radial median plane of a reference combustor unit 8, and a corresponding plane RPN of the N-th combustor unit 8, e.g. a radial median plane of the N-th combustor unit 8.

The azimuthal components $P^M(t)$ of order M are pulsation signals themselves and provide further information on the pulsation state of the combustor units 8. Therefore, the azimuthal components $P^M(t)$ of order M may be used to activate protecting measures.

The procedure described with reference to figure 3 may be then applied. Such a procedure, in fact, is independent of the specific nature of the pulsation signals used and of the specific spectral parameters selected for testing. In other words, the procedure does not depend on how the specific pulsation signals are generated, e.g. by pressure or optical or other sensors, and does not depend on whether the pulsation signals represent pulsations at a single respective combustor unit 8 (e.g. individual pulsation signals $P_N(t)$) or are provided as a combination of the pulsation signals $P_N(t)$ and thus represent combined effect of pulsations at different combustor units 8 (e.g. azimuthal components $P^M(t)$ of order M). Moreover, the spectral parameters may be peak amplitudes or peak frequencies as defined above and relevant amplitude and frequency thresholds may be used to define inadmissible ranges of values as appropriate. Spectral parameters of the examples of figures 4-10 and 12 may be spectral parameters of azimuthal components $P^M(t)$ of order M.

Hence, spectral parameters of the azimuthal components $P^M(t)$ of order M may be extracted after applying FFT and raw time series $TSR_N$ of the spectral parameters may be built and iteratively updated. Spectral parameters may include peak amplitude and/or peak frequency of spectrum peaks in one or more monitored bands or throughout the whole spectrum for one or more or all of the azimuthal components $P^M(t)$, in any combination. The raw time series $TSR_N$ may be smoothed e.g. by low-pass filtering to produce working time series $TSW_N$, which are then tested for compliance with activation criteria as defined above. Compliance tests include comparing values of the working time series $TSW_N$ of the azimuthal components $P^M(t)$ with (azimuthal) amplitude and/or frequency thresholds and matching value criteria and/or time criteria. In one embodiment, the processing unit 13 determines azimuthal components $P^M(t)$ of all orders M in the range [-ceil(NC/2) + 1; floor(NC/2)]. In one embodiment, the processing unit 13 determines a combination of azimuthal components $P^M(t)$ of different orders M or of all orders M in the range [-ceil(NC/2) + 1; floor(NC/2)] and the working time series $TSW_N$ form the combination of azimuthal components $P^M(t)$.

In one embodiment, the processing unit 13 determines an azimuthal component of order 0, i.e. an in-phase pulsation component $P_{IP}(t)$ which is defined by

$$P_{IP}(t) = \frac{1}{NC} \sum_{N=1}^{NC} P_N(t)$$

The in-phase pulsation component $P_{IP}(t)$ is in turn a pulsation signal. The spectral parameters comprise an in-phase peak amplitude of the in-phase pulsation component $P_{IP}(t)$. The processing unit 13 is configured to update and compare the working time series $TSW_N$ of the in-phase peak amplitude of the in-phase pulsation component $P_{IP}(t)$ with a pulsation threshold (in-phase pulsation threshold). The inadmissible range of values includes in-phase pulsation values greater than the pulsation threshold. It is known that in-phase pulsation component $P_{IP}(t)$ may cause torsional vibration of the rotor 7. Monitoring the spectral parameters of the in-phase pulsation component $P_{IP}(t)$ allows to activate protecting measures also against torsional vibration of the rotor, which may be thus prevented.

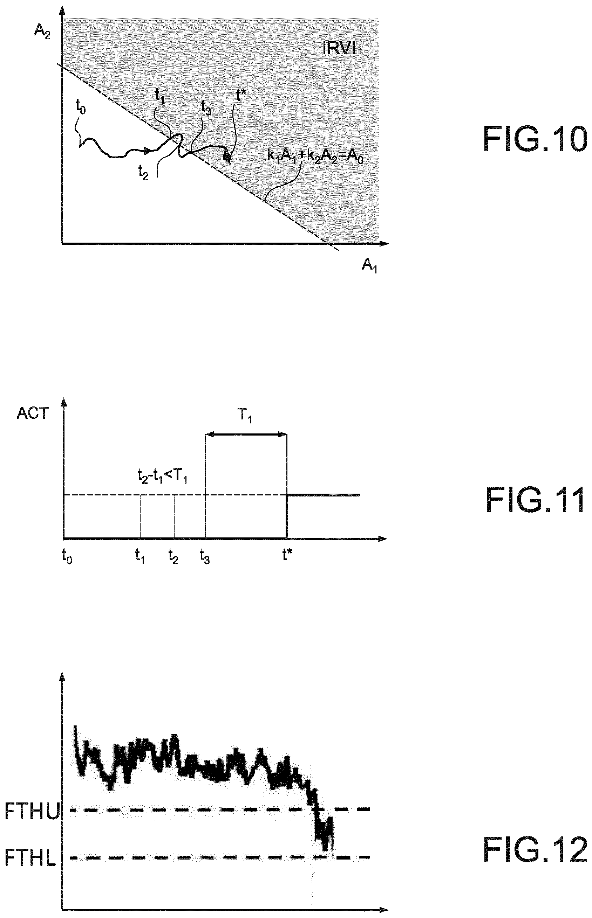

With reference to figures 4 and 10, in one embodiment the spectral parameters comprise a plurality of peak amplitudes $A_K$ in respective programmed frequency bands for each pulsation signal $P_N(t)$ and the processing unit 13 is configured to compare a combination of the working time series $TSW_N$ of the peak amplitudes $A_K$ with a combination amplitude threshold $A_0$. By way of non-limiting example, the combination may be a linear combination $k_1A_1 + ... + k_{NI}A_{NI}$ of values of the peak amplitudes $A_K$ for each pulsation signal $P_N(t)$, wherein NI is the number of significant peak amplitudes in the spectrum of the pulsation signal $P_N(t)$ and $K_1, ..., K_{NI}$ are coefficients of the linear combination. The inadmissible ranges of values IRVI for the pulsation signal $P_N(t)$ therefore includes the values of the combination greater than the combination amplitude threshold $A_0$:

$$IRVI = \{k_1A_1 + ... + k_{NI}A_{NI} > A_0\}.$$

In the example of figures 10-11, two peak amplitudes $A_1$, $A_2$ are considered as spectral parameters. The solid line in figure 10 exemplarily shows a plot of the working time series $TSW_N$. Figure 11 shows an activation signal ACT supplied by the processing unit 13 for activating protecting measures. The activation signal ACT switches to an activation value when the working time series $TSW_N$ remains in the inadmissible ranges of values IRVI for a time interval that exceeds the first time interval $T_1$.

With reference to figure 12, in one embodiment the spectral parameters comprise at least one peak frequency $F_1$ of a respective peak amplitude $A_1$ and the processing unit is further configured to compare the working time series of the peak frequency with a lower frequency threshold FTHL and an a upper frequency threshold FTHU. In this example, the inadmissible ranges of values IRVI includes a frequency band delimited by the lower frequency threshold FTHL and the upper frequency threshold FTHU.

It is finally apparent that changes and variations may be made to the gas turbine and method described and illustrated without departing from the scope of protection of the accompanying claims.

**Claims**

1. Gas turbine engine comprising:

   a combustor assembly (3), having a plurality of combustor units (8); and
   a control system (3), configured to control air supply and fuel supply to the combustor assembly (3);
   the control system (3) comprising:

   pulsation sensors (12) coupled to respective combustor units (8) and configured to provide pulsation signals $(P_N(t))$ in response to pulsations at the respective combustor units (8); and
   a processing unit (13) coupled to the pulsation sensors (12) to receive the pulsation signals $(P_N(t))$;

   **characterized in that** the processing unit (13) is configured to:

   determine working time series $(TSW_N)$ of spectral parameters $(A_1; A_1, A_2; F_1)$ of at least one of the pulsation signals $(P_N(t))$; and
   to selectively activate protecting measures based on the working time series $(TSW_N)$ and activation criteria, wherein the activation criteria include value criteria, defined by inadmissible ranges of values (IRVI) of the spectral parameters $(A_1; A_1, A_2; F_1)$, in combination with time criteria based on permanence of the spectral parameters in the inadmissible ranges of values (IRVI).

2. The gas turbine according to claim 1, wherein the spectral parameters comprise at least one peak amplitude $(A_1; A_1, A_2)$ and the processing unit (13) is further configured to compare the working time series $(TSW_N)$ of the peak amplitude $(A_1; A_1, A_2)$ with a respective individual amplitude threshold $(ATH_N)$, the inadmissible ranges of values (IRVI) including peak amplitude values greater than the individual amplitude threshold $(ATH_N)$.

3. The gas turbine according to claim 2, wherein the spectral parameters comprise a plurality of peak amplitudes $(A_1, A_2)$ in respective programmed frequency bands $(B_1, B_2)$ for each of the at least one pulsation signal $(P_N(t))$ and the processing unit (13) is further configured to compare a combination of the working time series $(TSW_N)$ of the peak amplitudes $(A_1, A_2)$ with a combination amplitude threshold $(A_0)$, the inadmissible ranges of values (IRVI) including the values of the combination greater than the combination amplitude threshold $(A_0)$.

4. The gas turbine according to any one of the preceding claims, wherein the spectral parameters comprise at least one peak frequency ($F_1$) of a respective peak amplitude ($A_1$) and the processing unit (13) is further configured to compare the working time series ($TSW_N$) of the peak frequency ($F_1$) with a lower frequency threshold (FTHL) and an a upper frequency threshold (FTHU), the inadmissible ranges of values (IRVI) including a frequency band delimited by the lower frequency threshold (FTHL) and the upper frequency threshold (FTHU).

5. The gas turbine according to any one of the preceding claims, wherein the processing unit (13) is configured to determine raw time series ($TRW_N$) of the spectral parameters ($A_1$; $A_1$, $A_2$; $F_1$) from the pulsation signals ($P_N(t)$) and to determine the working time series ($TSW_N$) from respective raw time series ($TRW_N$) by low-pass filtering.

6. The gas turbine according to any one of the preceding claims, wherein the time criteria include at least one of:

   the spectral parameters ($A_1$; $A_1$, $A_2$; $F_1$) of the working time series ($TSW_N$) continuously remaining in the inadmissible ranges of values (IRVI) for at least a first time interval ($T_1$);
   the spectral parameters ($A_1$; $A_1$, $A_2$; $F_1$) of the working time series ($TSW_N$) continuously or discontinuously remaining in the inadmissible ranges of values (IRVI) for at least a cumulated second time interval ($T_2$) within a check window (W);
   a time counter (TC) reaching a count threshold ($C_0$), the time counter (TC) being incremented by the processing unit (13) when the spectral parameters ($A_1$; $A_1$, $A_2$; $F_1$) of the working time series ($TSW_N$) are inside the inadmissible ranges of values (IRVI) and remaining unchanged or being decremented by the processing unit (13) when the spectral parameters of the working time series ($TSW_N$) are outside the inadmissible ranges of values (IRVI).

7. Method of operating a gas turbine comprising a combustor assembly (3), having a plurality of combustor units (8), and a control system (3), configured to control air supply and fuel supply to the combustor assembly (3);

   the method comprising:
   providing pulsation signals ($P_N(t)$) in response to pulsations at respective combustor units (8);
   **characterized by**:

   determining working time series ($TSW_N$) of spectral parameters ($A_1$; $A_1$, $A_2$; $F_1$) of at least one of the pulsation signals ($P_N(t)$);

   and
   selectively activating protecting measures based on the working time series ($TSW_N$) and activation criteria;
   wherein activating protecting measures comprises modifying air supply and/or fuel supply to the combustor assembly (3) and wherein the activation criteria include value criteria, defined by inadmissible ranges of values (IRVI) of the spectral parameters ($A_1$; $A_1$, $A_2$; $F_1$), in combination with time criteria based on permanence of the spectral parameters in the inadmissible ranges of values (IRVI).

8. The method according to claim 7, wherein the spectral parameters comprise at least one peak amplitude ($A_1$; $A_1$, $A_2$) in a respective frequency band; and further comprising comparing the working time series ($TSW_N$) of the peak amplitude ($A_1$; $A_1$, $A_2$) with a respective individual amplitude threshold ($ATH_N$), the inadmissible ranges of values (IRVI) including peak amplitude values greater than the individual amplitude threshold ($ATH_N$).

9. The method according to claim 8, wherein the spectral parameters comprise a plurality of peak amplitudes ($A_1$, $A_2$) in respective programmed frequency bands for each of the at least one pulsation signal ($P_N(t)$); and further comprising comparing a combination of the working time series ($TSW_N$) of the peak amplitudes with a combination amplitude threshold ($A_0$), the inadmissible ranges of values including (IRVI) the values of the combination greater than the combination amplitude threshold ($A_0$).

10. The method according to any one of claims 7 to 9, wherein the spectral parameters comprise at least one peak frequency ($F_1$) of a respective peak amplitude; and further comparing the working time series ($TSW_N$) of the peak frequency ($F_1$) with a lower frequency threshold (FTHL) and an a upper frequency threshold (FTHU), the inadmissible ranges of values (IRVI) including a frequency band delimited by the lower frequency threshold (FTHL) and the upper frequency threshold (FTHU).

11. The method according to any one of claims 7 to 10, wherein the time criteria include at least one of:

   the spectral parameters ($A_1$; $A_1$, $A_2$; $F_1$) of the working time series ($TSW_N$) continuously remaining in the inadmissible ranges of values (IRVI) for a first time interval ($T_1$);
   the spectral parameters ($A_1$; $A_1$, $A_2$; $F_1$) of the working time series ($TSW_N$) continuously or discontinuously remaining in the inadmissible ranges of values (IRVI) for at least a cumulated sec-

ond time interval ($T_2$) within a check window (W); a time counter (TC) reaching a count threshold ($C_0$), the counter being incremented by the processing unit (13) when the spectral parameters ($A_1$; $A_1$, $A_2$; $F_1$) of the working time series ($TSW_N$) are inside the inadmissible ranges of values (IRVI) and remaining unchanged or being decremented by the processing unit (13) when the spectral parameters of the working time series ($TSW_N$) are outside the inadmissible ranges of values (IRVI).

12. The method according to any one of claims 7 to 11, wherein determining the working time series ($TSW_N$) comprises low-pass filtering respective raw time series ($TRW_N$).

**Patentansprüche**

1. Gasturbinenmotor, umfassend:

eine Brenneranordnung (3), die eine Vielzahl von Brennereinheiten (8) hat; und
ein Steuerungssystem (3), das dafür konfiguriert ist, die Luftzufuhr und die Brennstoffzufuhr der Brenneranordnung (3) zu steuern;
wobei das Steuerungssystem (3) umfasst:

Pulsationssensoren (12), die mit den jeweiligen Brennereinheiten (8) gekoppelt sind und dafür konfiguriert sind, Pulsationssignale ($P_N(t)$) ansprechend auf Pulsationen der jeweiligen Brennereinheiten (8) bereitzustellen; und
eine Verarbeitungseinheit (13), die mit den Pulsationssensoren (12) gekoppelt ist, um die Pulsationssignale ($P_N(t)$) zu empfangen;
**dadurch gekennzeichnet, dass** die Verarbeitungseinheit (13) dafür konfiguriert ist, Arbeitszeitreihen ($TSW_N$) von Spektralparametern ($A_1$; $A_1$, $A_2$; $F_1$) mindestens eines der Pulsationssignale ($P_N(t)$) zu ermitteln; und
auf der Grundlage der Arbeitszeitreihe ($TSW_N$) und von Aktivierungskriterien selektiv Schutzmaßnahmen zu aktivieren, wobei die Aktivierungskriterien Wertekriterien, die durch unzulässige Wertebereiche (IRVI) der Spektralparameter ($A_1$; $A_1$, $A_2$; $F_1$) definiert sind, in Kombination mit Zeitkriterien auf der Grundlage der Permanenz der Spektralparameter in den unzulässigen Wertebereichen (IRVI) einschließen.

2. Gasturbine nach Anspruch 1, wobei die Spektralparameter mindestens eine Spitzenamplitude ($A_1$; $A_1$,

$A_2$) umfassen und die Verarbeitungseinheit (13) ferner dafür konfiguriert ist, die Arbeitszeitreihe ($TSW_N$) der Spitzenamplitude ($A_1$; $A_1$, $A_2$) mit einem jeweiligen individuellen Amplitudengrenzwert ($ATH_N$) zu vergleichen, wobei die unzulässigen Wertebereiche (IRVI) Spitzenamplitudenwerte einschließen, die größer sind als der individuelle Amplitudengrenzwert ($ATH_N$).

3. Gasturbine nach Anspruch 2, wobei die Spektralparameter eine Vielzahl von Spitzenamplituden ($A_1$, $A_2$) in jeweiligen programmierten Frequenzbändern ($B_1$, $B_2$) für jedes des mindestens einen Pulsationssignals ($P_N(t)$) umfassen und die Verarbeitungseinheit (13) ferner dafür konfiguriert ist, eine Kombination der Arbeitszeitreihe ($TSW_N$) der Spitzenamplituden ($A_1$, $A_2$) mit einem Kombinations-Amplitudengrenzwert ($A_0$) zu vergleichen, wobei die unzulässigen Wertebereiche (IRVI) die Werte der Kombination einschließen, die größer sind als der Kombinations-Amplitudengrenzwert ($A_0$).

4. Gasturbine nach einem der vorhergehenden Ansprüche, wobei die Spektralparameter mindestens eine Spitzenfrequenz ($F_1$) einer jeweiligen Spitzenamplitude ($A_1$) umfassen und die Verarbeitungseinheit (13) ferner dafür konfiguriert ist, die Arbeitszeitreihe ($TSW_N$) der Spitzenfrequenz ($F_1$) mit einem unteren Frequenzgrenzwert (FTHL) und einem oberen Frequenzgrenzwert (FTHU) zu vergleichen, wobei die unzulässigen Wertebereiche (IRVI) ein Frequenzband einschließen, das von dem unteren Frequenzgrenzwert (FTHL) und dem oberen Frequenzgrenzwert (FTHU) begrenzt ist.

5. Gasturbine nach einem der vorhergehenden Ansprüche, wobei die Verarbeitungseinheit (13) dafür konfiguriert ist, Rohzeitreihen ($TRW_N$) der Spektralparameter ($A_1$; $A_1$, $A_2$; $F_1$) aus den Pulsationssignalen ($P_N(t)$) zu ermitteln und die Arbeitszeitreihen ($TSW_N$) aus den jeweiligen Rohzeitreihen ($TRW_N$) durch Tiefpassfilterung zu ermitteln.

6. Gasturbine nach einem der vorhergehenden Ansprüche, wobei die Zeitkriterien mindestens eines der folgenden einschließen:

die Spektralparameter ($A_1$; $A_1$, $A_2$; $F_1$) der Arbeitszeitreihe ($TSW_N$) verbleiben über mindestens ein erstes Zeitintervall ($T_1$) kontinuierlich in den unzulässigen Wertebereichen (IRVI);
die Spektralparameter ($A_1$; $A_1$, $A_2$; $F_1$) der Arbeitszeitreihe ($TSW_N$) verbleiben über mindestens ein kumuliertes zweites Zeitintervall ($T_2$) innerhalb eines Prüffensters (W) kontinuierlich oder diskontinuierlich in den unzulässigen Wertebereichen (IRVI);
ein Zeitzähler (TC) erreicht einen Zählgrenzwert

$(C_0)$, wobei der Zeitzähler (TC) von der Verarbeitungseinheit (13) inkrementiert wird, wenn die Spektralparameter $(A_1; A_1, A_2; F_1)$ der Arbeitszeitreihe (TSW) innerhalb der unzulässigen Wertebereiche (IRVI) sind und unverändert bleiben, oder von der Verarbeitungseinheit (13) dekrementiert wird, wenn die Spektralparameter der Arbeitszeitreihe $(TSW_N)$ außerhalb der unzulässigen Wertebereiche (IRVI) sind.

7. Verfahren für den Betrieb einer Gasturbine, umfassend eine Brenneranordnung (3), die eine Vielzahl von Brennereinheiten (8) hat, und ein Steuerungssystem (3), das dafür konfiguriert ist, die Luftzufuhr und die Brennstoffzufuhr der Brenneranordnung (3) zu steuern;

wobei das Verfahren umfasst:
Bereitstellen von Pulsationssignalen $(P_N(t))$ ansprechend auf Pulsationen in den jeweiligen Brennereinheiten (8); und
**gekennzeichnet durch**:

Ermitteln von Arbeitszeitreihen $(TSW_N)$ von Spektralparametern $(A_1; A_1, A_2; F_1)$ mindestens eines der Pulsationssignale $(P_N(t))$; und
selektives Aktivieren von Schutzmaßnahmen auf der Grundlage der Arbeitszeitreihe $(TSW_N)$ und von Aktivierungskriterien; wobei das Aktivieren von Schutzmaßnahmen das Modifizieren der Luftzufuhr und/oder Brennstoffzufuhr der Brenneranordnung (3) umfasst, und wobei die Aktivierungskriterien Wertekriterien, die durch unzulässige Wertebereiche (IRVI) der Spektralparameter $(A_1; A_1, A_2; F_1)$ definiert sind, in Kombination mit Zeitkriterien auf der Grundlage der Permanenz der Spektralparameter in den unzulässigen Wertebereichen (IRVI) einschließen.

8. Verfahren nach Anspruch 7, wobei die Spektralparameter mindestens eine Spitzenamplitude $(A_1; A_1, A_2)$ in einem jeweiligen Frequenzband umfassen, und ferner umfassend das Vergleichen der Arbeitszeitreihe $(TSW_N)$ der Spitzenamplitude $(A_1; A_1, A_2)$ mit einem jeweiligen individuellen Amplitudengrenzwert $(ATH_N)$, wobei die unzulässigen Wertebereiche (IRVI) Spitzenamplitudenwerte einschließen, die größer sind als der individuelle Amplitudengrenzwert $(ATH_N)$.

9. Verfahren nach Anspruch 8, wobei die Spektralparameter eine Vielzahl von Spitzenamplituden $(A_1, A_2)$ in jeweiligen programmierten Frequenzbändern $(B_1, B_2)$ für jedes des mindestens einen Pulsationssignals $(P_N(t))$ umfassen, und ferner umfassend das Vergleichen einer Kombination der Arbeitszeitreihe $(TSW_N)$ der Spitzenamplituden $(A_1, A_2)$ mit einem Kombinations-Amplitudengrenzwert $(A_0)$, wobei die unzulässigen Wertebereiche (IRVI) die Werte der Kombination einschließen, die größer sind als der Kombinations-Amplitudengrenzwert $(A_0)$.

10. Verfahren nach einem der Ansprüche 7 bis 9, wobei die Spektralparameter mindestens eine Spitzenfrequenz $(F_1)$ einer jeweiligen Spitzenamplitude $(A_1)$ umfassen, und ferner das Vergleichen der Arbeitszeitreihe $(TSW_N)$ der Spitzenfrequenz $(F_1)$ mit einem unteren Frequenzgrenzwert (FTHL) und einem oberen Frequenzgrenzwert (FTHU), wobei die unzulässigen Wertebereiche (IRVI) ein Frequenzband einschließen, das von dem unteren Frequenzgrenzwert (FTHL) und dem oberen Frequenzgrenzwert (FTHU) begrenzt ist.

11. Verfahren nach einem der Ansprüche 7 bis 10, wobei die Zeitkriterien mindestens eines der folgenden einschließen:

die Spektralparameter $(A_1; A_1, A_2; F_1)$ der Arbeitszeitreihe $(TSW_N)$ verbleiben über ein erstes Zeitintervall $(T_1)$ kontinuierlich in den unzulässigen Wertebereichen (IRVI);
die Spektralparameter $(A_1; A_1, A_2; F_1)$ der Arbeitszeitreihe $(TSW_N)$ verbleiben über mindestens ein kumuliertes zweites Zeitintervall $(T_2)$ innerhalb eines Prüffensters (W) kontinuierlich oder diskontinuierlich in den unzulässigen Wertebereichen (IRVI);
ein Zeitzähler (TC) erreicht einen Zählgrenzwert $(C_0)$, wobei der Zeitzähler (TC) von der Verarbeitungseinheit (13) inkrementiert wird, wenn die Spektralparameter $(A_1; A_1, A_2; F_1)$ der Arbeitszeitreihe (TSW) innerhalb des unzulässigen Wertebereichs (IRVI) sind und unverändert bleiben, oder von der Verarbeitungseinheit (13) dekrementiert wird, wenn die Spektralparameter der Arbeitszeitreihe $(TSW_N)$ außerhalb des unzulässigen Wertebereichs (IRVI) sind.

12. Verfahren nach einem der Ansprüche 7 bis 11, wobei das Ermitteln der Arbeitszeitreihe $(TSW_N)$ die Tiefpassfilterung einer jeweiligen Rohzeitreihe $(TRW_N)$ umfasst.

**Revendications**

1. Moteur de turbine à gaz comprenant :

un ensemble chambre de combustion (3), ayant une pluralité d'unités de chambre de combustion (8) ; et
un système de commande (3), configuré pour commander l'alimentation en air et l'alimentation en carburant de l'ensemble chambre de combustion (3) ;

le système de commande (3) comprenant :

des capteurs de pulsation (12) couplés à des unités de combustion respectives (8) et configurés pour fournir des signaux de pulsation (PN(t)) en réponse à des pulsations au niveau des unités de combustion respectives (8) ; et

une unité de traitement (13) couplée aux capteurs de pulsation (12) pour recevoir les signaux de pulsation ($P_N(t)$) ;

**caractérisé en ce que** l'unité de traitement (13) est configurée pour :

déterminer des séries temporelles de travail($TSW_N$) de paramètres spectraux (Ai ; Ai, A2 ; Fi) d'au moins un des signaux de pulsation ($P_N(t)$) ; et

pour activer sélectivement des mesures de protection sur la base de la série temporelle de travail ($TSW_N$) et des critères d'activation, dans lequel les critères d'activation incluent des critères de valeur, définis par des plages de valeurs inadmissibles (IRVI) des paramètres spectraux (Ai ; Ai, A2 ; Fi), en combinaison avec des critères de temps basés sur la permanence des paramètres spectraux dans les plages de valeurs inadmissibles (IRVI).

2. Turbine à gaz selon la revendication 1, dans laquelle les paramètres spectraux comprennent au moins une amplitude de crête (Ai ; Ai, A2) et l'unité de traitement (13) est en outre configurée pour comparer la série temporelle de travail ($TSW_N$) de l'amplitude de crête (Ai ; Ai, A2) à un seuil d'amplitude individuel (ATHn) respectif, les plages de valeurs inadmissibles (IRVI) comprenant des valeurs d'amplitude de crête supérieures au seuil d'amplitude individuel ($ATH_N$).

3. Turbine à gaz selon la revendication 2, dans laquelle les paramètres spectraux comprennent une pluralité d'amplitudes de crête (Ai, $A_2$) dans des bandes de fréquence programmées (Bi, $B_2$) respectives pour chacun du au moins un signal de pulsation (PN(t)) et l'unité de traitement (13) est en outre configurée pour comparer une combinaison des séries temporelles de travail (TSWn) des amplitudes de crête (Ai, $A_2$) à un seuil d'amplitude de combinaison (Ao), les plages de valeurs inadmissibles (IRVI) comprenant les valeurs de la combinaison supérieures au seuil d'amplitude de combinaison ($A_○$).

4. Turbine à gaz selon l'une quelconque des revendications précédentes, dans laquelle les paramètres spectraux comprennent au moins une fréquence de crête (Fi) d'une amplitude de crête (Ai) respective et l'unité de traitement (13) est en outre configurée pour comparer la série temporelle de travail ($TSW_N$) de la fréquence de crête (Fi) à un seuil de fréquence inférieur (FTHL) et un seuil de fréquence supérieur (FTHU), les plages de valeurs inadmissibles (IRVI) incluant une bande de fréquences délimitée par le seuil de fréquence inférieur (FTHL) et le seuil de fréquence supérieur (FTHU).

5. Turbine à gaz selon l'une quelconque des revendications précédentes, dans laquelle l'unité de traitement (13) est configurée pour déterminer des séries temporelles brutes ($TRW_N$) des paramètres spectraux (Ai ; Ai, A2 ; Fi) à partir des signaux de pulsation (PN(t)) et pour déterminer les séries temporelles de travail ($TSW_N$) à partir des séries temporelles brutes respectives ($TRW_N$) par filtrage passe-bas.

6. Turbine à gaz selon l'une quelconque des revendications précédentes, dans laquelle les critères temporels incluent au moins un élément parmi :

les paramètres spectraux (Ai ; Ai, A2 ; Fi) de la série temporelle de travail (TSWn) restant continuellement dans les plages de valeurs inadmissibles (IRVI) pendant au moins un premier intervalle de temps (Ti) ;

les paramètres spectraux (Ai ; Ai, A2 ; Fi) de la série temporelle de travail (TSWn) restant de manière continue ou discontinue dans les plages de valeurs inadmissibles (IRVI) pendant au moins un second intervalle de temps cumulé (T2) à l'intérieur d'une fenêtre de contrôle (W) ;

un compteur de temps (TC) atteignant un seuil de comptage (C0), le compteur de temps (TC) étant incrémenté par l'unité de traitement (13) lorsque les paramètres spectraux (Ai ; Ai, A2 ; Fi) de la série temporelle de travail (TSWn) sont à l'intérieur des plages de valeurs inadmissibles (IRVI) et restant inchangé ou étant décrémenté par l'unité de traitement (13) lorsque les paramètres spectraux de la série temporelle de travail (TSWn) sont à l'extérieur des plages de valeurs inadmissibles (IRVI).

7. Procédé de fonctionnement d'une turbine à gaz comprenant un ensemble chambre de combustion (3), doté d'une pluralité d'unités de chambre de combustion (8), et un système de commande (3), configuré pour commander l'alimentation en air et l'alimentation en carburant de l'ensemble chambre de combustion (3) ;

le procédé comprenant :

la fourniture de signaux de pulsation (PN(t)) en réponse à des pulsations au niveau des unités de combustion respectives (8) ;
**caractérisé par** :

la détermination des séries temporelles de travail (TSW$_N$) de paramètres spectraux (Ai ; Ai, A2 ; Fi) d'au moins un des signaux de pulsation (P$_N$(t)) ; et

l'activation sélective de mesures de protection en fonction de la série temporelle de travail (TSW$_N$) et de critères d'activation ; dans lequel l'activation des mesures de protection comprend la modification de l'alimentation en air et/ou de l'alimentation en combustible de l'ensemble de chambre de combustion (3) et dans lequel les critères d'activation comprennent des critères de valeur, définis par des plages de valeurs inadmissibles (IRVI) des paramètres spectraux (Ai ; Ai, A2 ; Fi), en combinaison avec des critères de temps basés sur la permanence des paramètres spectraux dans les plages de valeurs inadmissibles (IRVI).

8. Procédé selon la revendication 7, dans laquelle les paramètres spectraux comprennent au moins une amplitude de crête (Ai ; Ai, A2) dans une bande de fréquence respective ; et comprenant en outre la comparaison de la série temporelle de travail (TSW$_N$) de l'amplitude de crête (Ai ; Ai, A2) à un seuil d'amplitude individuel (ATHn) respectif, les plages de valeurs inadmissibles (IRVI) incluant des valeurs d'amplitude de crête supérieures au seuil d'amplitude individuel (ATH$_N$).

9. Procédé selon la revendication 8, dans lequel les paramètres spectraux comprennent une pluralité d'amplitudes de crête (A$_1$, A$_2$) dans des bandes de fréquences programmées respectives pour chacun des au moins un signal de pulsation (PN(t)) ; et comprenant en outre la comparaison d'une combinaison des séries temporelles de travail (TSW$_N$) des amplitudes de crête avec un seuil d'amplitude de combinaison (Ao), les plages de valeurs inadmissibles incluant (IRVI) les valeurs de la combinaison supérieures au seuil d'amplitude de combinaison(Ao).

10. Procédé selon l'une quelconque des revendications 7 à 9, dans lequel les paramètres spectraux comprennent au moins une fréquence de crête (Fi) d'une amplitude de crête respective ; et la comparaison en outre de la série temporelle de travail (TSWn) de la fréquence de crête (Fi) à un seuil de fréquence inférieur (FTHL) et un seuil de fréquence supérieur (FTHU), les plages de valeurs inadmissibles (IRVI) incluant une bande de fréquences délimitée par le seuil de fréquence inférieur (FTHL) et le seuil de fréquence supérieur (FTHU).

11. Procédé selon l'une quelconque des revendications 7 à 10, dans lequel les critères temporels incluent au moins un élément parmi :

les paramètres spectraux (Ai; Ai, A2; Fi) de la série temporelle de travail (TSWn) restant continuellement dans les plages de valeurs inadmissibles (IRVI) pendant au moins un premier intervalle de temps (T1) ;
les paramètres spectraux (Ai ; Ai, A2 ; Fi) de la série temporelle de travail (TSWn) restant de manière continue ou discontinue dans les plages de valeurs inadmissibles (IRVI) pendant au moins un second intervalle de temps cumulé (T2) à l'intérieur d'une fenêtre de contrôle (W) ; un compteur de temps (TC) atteignant un seuil de comptage (Co), le compteur étant incrémenté par l'unité de traitement (13) lorsque les paramètres spectraux (Ai ; Ai, A2 ; Fi) de la série temporelle de travail (TSWn) sont à l'intérieur des plages de valeurs inadmissibles (IRVI) et restant inchangé ou étant décrémenté par l'unité de traitement (13) lorsque les paramètres spectraux de la série temporelle de travail (TSWn) sont à l'extérieur des plages de valeurs inadmissibles (IRVI).

12. Procédé selon l'une quelconque des revendications 7 à 11, dans lequel la détermination de la série temporelle de travail (TSW$_N$) comprend un filtrage passe-bas de la série temporelle brute respective (TRW$_N$).

FIG.1

FIG.2

100 — CONVERT RECEIVED ANALOGUE PULSATION SIGNALS PI(T) INTO CORRESPONDING DIGITAL SIGNALS

APPLY FFT — 110

120 — EXTRACT SPECTRAL PARAMETERS

UPDATE RAW TIME SERIES TSRI — 130

140 — LOW-PASS FILTER RAW TIME SERIES TSRI AND UPDATE WORKING TIME SERIES TSWI

NO — ACTIVATION CRITERIA MET — YES
150

160 — ACTIVATE PROTECTING MEASURES

FIG.3

FIG.4

FIG.5

FIG.6

FIG.7

FIG.8

FIG.9

FIG.10

FIG.11

FIG.12

**EP 3 845 815 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015166396 A1
- US 2007062196 A1
- US 2012275899 A1
- US 2009133379 A1
- US 2005056024 A1